# EUROPÄISCHE PATENTSCHRIFT

(11) **EP 3 574 264 B1**
(45) Veröffentlichungstag und Bekanntmachung des Hinweises auf die Patenterteilung: **13.04.2022**
(21) Anmeldenummer: 18701724.9
(22) Anmeldetag: 23.01.2018
(51) Int. Cl.: F24C 7/08, H05B 6/06, A47J 27/14

(54) **VERFAHREN ZUM BETREIBEN EINES GARGERÄTS SOWIE BAUGRUPPE ZUM DURCHFÜHREN DES VERFAHRENS**
METHOD FOR OPERATING A COOKING DEVICE AND ASSEMBLY FOR CARRYING OUT THE METHOD
PROCÉDÉ POUR FAIRE FONCTIONNER UN APPAREIL DE CUISSON ET MODULE POUR LA MISE EN OEUVRE DE CE PROCÉDÉ

(30) Priorität: 25.01.2017 DE 102017101407
(43) Veröffentlichungstag der Anmeldung: 04.12.2019
(73) Patentinhaber: RATIONAL International AG, 9435 Heerbrugg (CH)
(72) Erfinder: LINGENHEIL, Markus, 9435 Heerbrugg (CH); DEIS, Jérôme, 9435 Heerbrugg (CH)
(74) Vertreter: Prinz & Partner mbB
(86) Internationale Anmeldenummer: PCT/EP2018/051562
(87) Internationale Veröffentlichungsnummer: WO 2018/138078

(56) Entgegenhaltungen:
- EP-A2- 1 489 887
- WO-A1-2013/127105
- WO-A1-2015/185404
- WO-A1-2018/033428
- DE-A1- 10 353 299
- JP-A- 2005 009 771
- US-A- 4 566 804
- US-A- 6 022 572
- US-A1- 2015 057 773

## Beschreibung

Die Erfindung betrifft ein Verfahren zum Betreiben eines Gargeräts sowie eine Baugruppe mit einem Gewichtsmesssystem und einem Gargerät.

Gargeräte, die in Profi- bzw. Großküchen zum Einsatz kommen, weisen üblicherweise einen Garbehälter auf, in dem ein zu garendes Gargut eingebracht werden kann. Der Garbehälter kann ein Garraum sein, der mittels einer Garraumtür verschließbar ist. Eine besondere Art von Gargeräten weist einen als Tiegel ausgebildeten Garbehälter auf, in dem das Gargut eingebracht werden kann. Die tiegelartigen Garbehälter eignen sich insbesondere zur Zubereitung von Flüssigkeiten wie Suppen oder für das Frittieren von Gargütern, wobei das Frittieröl in den Garbehälter eingebracht wird.

Zur Zubereitung von Speisen, müssen die zu verwendenden Stoffe, also Zutaten, Wasser, Gargut, Frittieröl etc., in der gewünschten Menge vorgesehen und dem Garbehälter zugeführt werden. Üblicherweise werden hierzu die verschiedenen Stoffe, die beim Garprozess vorgesehen sind, zunächst mit einer separaten Waage gewogen, um die gewünschten Mengen zu erhalten. Anschließend werden die Stoffe in den Garbehälter eingebracht und zubereitet. Beispielsweise wird zunächst das Wasser mit einigen Zutaten eingebracht und während des Garvorgangs weitere Zutaten, die jeweils Gargüter darstellen.

Neben der reinen Mengenbestimmung muss beim Garen von Gargut auch darauf geachtet werden, dass gewisse Sicherheitsbestimmungen eingehalten werden, die einen reibungslosen Garprozess garantieren. Hierbei kann es sich beispielsweise darum handeln, dass gewisse gerätespezifische Vorgaben nicht überschritten werden, wie Dampfdrücke beim Dampfgaren.

Des Weiteren soll die Effizienz der mit dem Gargerät ablaufenden Garprozesse stets effizienter gestaltet bzw. optimiert werden, indem beispielsweise der Energieverbrauch und/oder die Garzeit minimiert werden.

Aus der DE 10 2012 015 155 A1 ist ein Gargerät mit einem Garbehälter und einer Gewichtserkennung bekannt, wobei das Gewicht der im Garbehälter eingebrachten Lebensmittel überwacht wird, um unter anderem ein Nachfüllen von Lebensmitteln dem Benutzer anzuzeigen.

In der DE 101 20 136 A1 sind ein Garverfahren und ein Gargerät beschrieben, bei denen ein auf einer Garfläche aufgelegtes Gargut mittels eines Gewichtssensors erkannt wird. Eine der Position des Garguts auf der Garfläche zugeordnete Heizeinheit wird entsprechend angesteuert.

Aus der DE 103 53 299 A1 ist ein Kochtopf bekannt, der auf einem herkömmlichen Kochfeld in Form einer Herdplatte gestellt werden kann, das ein Gewichtsmesssystem aufweist.

Die WO 2015/185404 A1 beschreibt ein Gargerät mit einem Garbehälter, in dem ein Gargut mittels Luft oder Öl gegart werden kann. Dem Garbehälter sind mehrere Gewichtssensoren, insbesondere Drucksensoren, zugeordnet, die das Gewicht eines zu garenden Garguts während des Garprozesses messen und so eine Gewichtsänderung des Garguts feststellen können.

Die EP 1 489 887 A2 beschreibt ein Mikrowellengerät zum Erwärmen von Lebensmitteln. Dabei kann die Richtung der Mikrowellen verändert werden, indem ein Ausgang für die Mikrowellen entsprechend gesteuert wird. Der Zeitpunkt des Umschaltens sowie die gesamte Garzeit hängen dabei vom Gewicht des Garguts ab, wobei das Gewicht von einem Gewichtssensor gemessen wird.

Die JP 2005-9771 A offenbart ein Mikrowellengerät mit einem Garraum zur Aufnahme eines Garguts. Das Mikrowellengerät weist ein Gewichtsmesssystem mit mehreren Gewichtssensoren auf, wobei das Gewichtsmesssystem das Gewicht des Garguts messen kann. In Abhängigkeit vom Gewicht des Garguts wird eine Heizleistung sowie die Garzeit eingestellt.

In der WO 2013/127105 A1 ist ein Anzeigegerät mit einem Display zu offenbart, das an ein Gargerät angeschlossen werden kann.

Die WO2018/033428 A1 offenbart eine Garvorrichtung mit einer induktiven Heizvorrichtung und Gewichtssensoren, die ein Gewicht eines auf der Garvorrichtung platzierten Garbehälters samt darin befindlichen Gargut messen können. Die US 2015/0057773 A1 beschreibt einen Konditionierer mit mehreren Sensoren, die verschiedene Eigenschaften eines Nahrungsmittels feststellen können, insbesondere ein Gewicht.

Die US 4,566,804 A beschreibt eine Mikrowelle zum kontrollierten Erhitzen von Gargütern.

US 6 022 572 A beschreibt ein Gargerät, bei dem eine Beladungsmenge automatisch bestimmt werden kann. Anhand der Beladungsmenge können Prozessparameter gewählt werden.

Die DE 103 53 299 A1 beschreibt einen Garprozess, bei dem das Gewicht eines Garguts kontinuierlich überwacht wird. Basierend auf einer zugeführten Heizenergie und einer daraus resultierenden Gewichtsabnahme können insbesondere Rückschlüsse auf ein Nahrungsmittel geschlossen werden.

Die Aufgabe der Erfindung ist es, ein Gargerät möglichst effizient und sicher zu betreiben, sodass die Garprozesse in optimierter Weise durchgeführt werden können.

Die Aufgabe wird erfindungsgemäß durch ein Verfahren zum Betreiben eines Gargeräts gelöst, das einen Garbehälter, dem ein Gewichtsmesssystem zugeordnet ist, und eine Steuerung umfasst, über die der Ablauf eines Garprozesses in automatischer Weise gesteuert wird, wobei das Gewicht eines in den Garbehälter eingebrachten Stoffes über eine Differenzgewichtsbestimmung ermittelt wird, wobei zunächst das Gewicht des Gargeräts ermittelt wird und dies vom Gesamtgewicht abgezogen wird, nachdem der Stoff in den Garbehälter eingebracht wurde, sodass sich die Tara bzw. das Taragewicht ermittelt lässt, und wobei das ermittelte Gewicht als Parameter für eine Sicherheitsfunktion und/oder eine Garprozessoptimierung herangezogen wird, wobei die Garprozessoptimierung zumindest eine Zeitoptimierung umfasst, sodass der Garprozess hinsichtlich seiner Dauer an das Gewicht des eingebrachten Stoffes angepasst wird, und wobei aufgrund einer während des ablaufenden Garprozesses ermittelten Gewichtsreduktion der im Garbehälter vorliegenden Stoffe Einstellungen am Gargerät aufgrund der erfassten Gewichtsreduktion automatisch vorgenommen oder dem Bediener des Gargeräts vorgeschlagen werden. Zudem wird die Menge des eingebrachten Stoffs ermittelt, und, sofern das Gewichtsmesssystem feststellt, dass eine eingebrachte Menge von Wasser bzw. Frittieröl/-fett einen Schwellwert überschreitet, ein Druckbetrieb bzw. ein Fritteusenbetrieb des Gargeräts abgesichert wird, indem eine Warnung ausgegeben und/oder das Gargerät gesperrt wird.

Der Grundgedanke der Erfindung ist es, dass dem Garbehälter selbst ein Gewichtsmesssystem zugeordnet ist, mit dem das Gewicht bzw. die Menge eines eingebrachten Stoffs in einfacher Weise bestimmt werden kann. Hierzu wird auf eine Differenzgewichtsbestimmung abgestellt, was bedeutet, dass die Zunahme des Gewichts ermittelt wird, die sich ergibt, wenn der Garbehälter mit einem Stoff befüllt wird. Dementsprechend kann hieraus auf die Menge bzw. das Gewicht des eingebrachten Stoffs geschlossen werden, wobei die Menge bzw. das Gewicht des Stoffs als Parameter für eine Sicherheitsfunktion und/oder eine Garprozessoptimierung herangezogen wird, die zumindest eine Zeitoptimierung umfasst, sodass der Garprozess in effizienter Weise und sicher betrieben werden kann. Über das erfasste Gewicht kann auf die Menge des eingebrachten Stoffes geschlossen werden. Je größer die Menge des eingebrachten Stoffes bzw. dessen Gewicht, insbesondere eines Garguts, desto länger kann die Gardauer sein. Es ist demnach gewährleistet, dass die Garzeit auf die erfasste Menge bzw. das Gewicht des eingebrachten Stoffes optimiert ist, um ein optimales Garergebnis zu erhalten.

Bei den Einstellungen, die aufgrund der ermittelten Gewichtsreduktion vorgenommen werden, kann es sich um geänderte Heizleistungen handeln.

Da das Gewichtsmesssystem dem Garbehälter zugeordnet ist, kann die Menge bzw. das Gewicht des Stoffes unabhängig von einer etwaigen Deckelposition bestimmt werden.

Beispielsweise stellt die Wassermenge bei einem Druckbetrieb des Gargeräts einen sicherheitsrelevanten Parameter dar, weil bei einer zu großen Wassermenge ein zu großer Druck aufgebaut werden könnte, wodurch die Sicherheit des Gargeräts während des Garprozesses nicht mehr gewährleistet wäre. Dies gilt in analoger Weise für die eingebrachte Menge von Frittieröl bzw. Frittierfett, welche im Fritteusenbetrieb des Gargeräts ebenfalls einen sicherheitsrelevanten Parameter darstellt.

Ein Aspekt sieht vor, dass es sich bei dem Stoff um Wasser, Öl oder Gargut handelt. In Abhängigkeit vom gewünschten Garprozess kann ein anderer Stoff in den Garbehälter eingebracht werden, da beispielsweise bei einer Suppe zunächst Wasser in den Garbehälter eingelassen wird, deren Menge bzw. Gewicht sich entsprechend über die Differenzgewichtsbestimmung erfassen lässt. Alternativ kann ein aus einem Feststoff bestehendes Gargut in den Garbehälter eingebracht werden, welches im Garbehälter beispielsweise angebraten wird. Die Menge des Garguts kann dabei ebenfalls über die Differenzgewichtsbestimmung ermittelt werden. Unter Stoff sind sämtliche, für einen Garprozess vorgesehene Zutaten zu verstehen, also auch Gewürze oder ähnliches, selbst wenn diese vor dem Servieren der zubereiteten Speise noch entfernt werden sollten.

Ein weiterer Aspekt sieht vor, dass das ermittelte Gewicht des eingebrachten Stoffes angezeigt wird. Hierdurch kann der Benutzer des Gargeräts direkt erfahren, wie groß die Menge bzw. das Gewicht des eingebrachten Stoffes ist, sodass er leicht überprüfen kann, ob die gewünschte Menge bereits eingebracht wurde.

Insbesondere wird die Menge des eingebrachten Stoffes ermittelt, sodass das Portionieren des Stoffes vereinfacht wird. Hierdurch lassen sich die einzelnen Zutaten für einen Garprozess, insbesondere Wasser und/oder Gargut, in einfacher Weise und sicher im Gargerät selbst portionieren. Es entfällt somit der separate Wiegeschritt, der sonst üblicherweise mit einer externen Waage vorgenommen wird. Dementsprechend wird der Garprozess effizienter gestaltet bzw. optimiert.

Gemäß einem weiteren Aspekt wird das ermittelte Gewicht des eingebrachten Stoffes für eine automatisierte Garprozessoptimierung verwendet. Demnach greift eine Steuerung des Gargeräts auf das Gewichtsmesssystem zu, wobei es die Ausgangswerte des Gewichtsmesssystems als Eingangsparameter erhält, aufgrund derer der Garprozess und/oder das Gargerät gesteuert wird. In Abhängigkeit vom erhaltenen Gewicht, das vom Gewichtsmesssystem gemessen wurde, kann die Steuerung des Gargeräts einen abzuarbeitenden Garprozess optimieren. Dies stellt sicher, dass Fehlbedienungen des Bedieners vermieden werden, da das Gargerät, insbesondere die Steuerung, automatisch die entsprechenden Garprozessparameter an die ermittelte Menge bzw. das ermittelte Gewicht des eingebrachten Stoffs anpasst. Das Gargerät wird somit mit einer zusätzlichen Intelligenz ausgestattet, da es während des Garprozesses, also live, Parameter des Garprozesses anpassen kann.

Hierbei kann es sich um Füllstände handeln, die mittels der Differenzgewichtsbestimmung erfasst und überwacht werden, insbesondere von der Steuerung. Die erfassten und überwachten Füllstände können das Gargut selbst oder ein Garhilfsmedium betreffen, beispielsweise Wasser, Fett und/oder Öl.

Entsprechend der Überwachung der Füllstände kann eine Meldung an den Bediener ausgegeben werden, wonach ein Stoff nachgefüllt werden sollte. Bei dem Stoff handelt es sich beispielsweise um ein Garhilfsmedium.

Insbesondere kann der Garprozess dahingehend optimiert werden, dass variable Füllstände der Stoffe während des Garprozesses vorgesehen sind. Insofern kann das Gargerät (auch selbsttätig) Stoffe während des Betriebs nachfüllen, insbesondere ein Garhilfsmedium wie Wasser.

Generell kann eine Garprozessoptimierung auch darin liegen, dass eine Gewichtsreduktion des Garguts über die Differenzgewichtsbestimmung erfasst wird, insbesondere während des ablaufenden Garprozesses. Beispielsweise ist beim Garen bestimmter Gargüter ein Gewichtsverlust des Garguts nicht gewünscht. Der Garprozess wird daher so optimiert, dass das Gargut ohne oder mit sehr geringem Gewichtsverlust gegart wird. Beispielweise wird die Temperatur beim Garen reduziert, um dem auftretenden Gewichtsverlust entgegenzuwirken.

Ein weiteres Beispiel ist, dass der Zeitpunkt festgestellt wird, wann eine Soße im gewünschten Maße reduziert worden ist, was ebenfalls eine Garprozessoptimierung darstellt. Aufgrund der ermittelten Gewichtsreduktion erhält das Gargerät somit die Information, ob die Soße die gewünschte Konsistenz hat. Der Garprozess wird dann bei der gewünschten Konsistenz der Soße gestoppt, sodass ein optimiertes Garergebnis vorliegt.

Zudem wird erfindungsgemäß eine Gewichtsreduktion der im Garbehälter befindlichen Stoffe über die Differenzgewichtsbestimmung festgestellt, insbesondere des Garguts. Dies ist beispielsweise für das Portionieren von Speisen von Bedeutung, da sich entsprechend überprüfen lässt, dass stets dieselbe oder im Wesentlichen dieselbe Gewichtsmenge aus dem Garbehälter entnommen wird. Demnach sind die verschiedenen Portionen im Wesentlichen gleich groß.

Insbesondere wird das ermittelte Gewicht des Stoffes zur Heiztemperaturoptimierung des Garprozesses herangezogen. Es kann die Heiztemperatur entsprechend angepasst werden, da bei einer geringeren Menge eine kleinere Heizleistung ausreichend sein kann. Die Heiztemperaturoptimierung stellt einen Aspekt der Garprozessoptimierung dar.

Die Garzeit sowie die Heiztemperatur lassen sich automatisch durch die Steuerung anpassen, sodass ein automatisierter Garprozess abläuft.

Die Zeitoptimierung und/oder die Heiztemperaturoptimierung des Garprozesses lassen bzw. lässt sich auch bei einem Garprozess anwenden, bei dem das Gargut ungewollt (viel) Gewicht verloren hat. Die Heiztemperatur und/oder die Garzeit werden bzw. wird daraufhin angepasst.

Ferner kann die Verteilung des Stoffes im Garbehälter ermittelt werden, sodass dem Garbehälter zugeordnete Heizelemente in Abhängigkeit von der ermittelten Verteilung des Stoffes angesteuert werden. Hierdurch ergibt sich eine Verbesserung des Leistungsmanagements des Gargeräts im Betrieb, da lediglich die Heizelemente angesteuert werden, denen Gargut auch tatsächlich zugeordnet ist. Eine ineffiziente Heizung des gesamten Garbehälters wird demnach vermieden. Das Gewichtsmesssystem weist hierzu beispielsweise mehrere Gewichtssensoren auf, die verteilt angeordnet und dem Garbehälter zugeordnet sind, sodass sich eine entsprechende Gewichtsverteilung des eingebrachten Stoffes im Garbehälter ermitteln lässt. Diese Ausführungsvariante ist insbesondere für als Festkörper vorliegende Gargüter von Bedeutung, da sich diese unregelmäßig im Garbehälter verteilen können. Der Energieverbrauch des Gargeräts lässt sich so senken, wodurch die Effizienz entsprechend steigt.

Eine weitere Sicherheitsfunktion betrifft die Füllstände, da eine Überfüllung vermieden werden kann. Das Gargerät, insbesondere dessen Steuerung, kann einen Wasserzulauf des Gargeräts automatisch sperren, sofern über die Differenzgewichtsbestimmung festgestellt wurde, dass der Garbehälter schon befüllt ist. Hierfür kann ein Schwellwert hinsichtlich der Differenzgewichtsbestimmung in der Steuerung hinterlegt sein, bei dessen Erreichen oder Überschreiten der Wasserzulauf gesperrt wird. Alternativ oder ergänzend kann zunächst eine Warnung an den Bediener des Gargeräts ausgegeben werden, wonach eine Überfüllung des Garbehälters droht. Diese Warnung kann wiederum dann ausgegeben werden, wenn ein (anderer) Schwellwert erreicht oder überschritten worden ist. Beispielsweise sind demnach zwei unterschiedliche Schwellwerte in der Steuerung hinterlegt.

Zudem lassen sich Kochrezepte leichter durchführen, da die Mengen der einzelnen Stoffe, die das Kochrezept vorsieht, direkt im Garbehälter über die Differenzgewichtsbestimmung abgemessen werden können. Dies wird allgemein auch als sogenannte Zuwiegefunktion bezeichnet. Bei den einzelnen Stoffen kann es sich um Garhilfsmedien handeln wie Wasser, Öl und/oder Fett oder um das Gargut selbst.

Auch lassen sich in einfacher Weise Kochrezepte programmieren und/oder editieren, indem die gewogene Menge eines Stoffes, der als Zutat für das entsprechende Kochrezept dient, als Sollwert einprogrammiert wird oder der im Kochrezept bestehende Sollwert überschrieben wird. Die Programmierung kann dabei am Gargerät oder dem Gewichtsmesssystem erfolgen, insbesondere der entsprechenden Steuerung.

Ferner wird die Aufgabe erfindungsgemäß durch eine Baugruppe gelöst, mit einem Gewichtsmesssystem und einem Gargerät, das eine Steuerung aufweist, die eingerichtet ist, ein Verfahren der zuvor genannten Art durchzuführen. Dementsprechend ist es mit der Baugruppe möglich, einen Garprozess in effizienter und sicherer Weise zu betreiben.

Gemäß einem Aspekt ist das Gewichtsmesssystem in einem Zwischenrahmen integriert, auf dem das Gargerät angeordnet ist, insbesondere wobei das Gewichtsmesssystem mehrere einzelne Gewichtssensoren aufweist, die verteilt angeordnet sind. Dementsprechend können herkömmliche Gargeräte ohne Gewichtsmesssystem verwendet werden, die dem Zwischenrahmen zugeordnet werden, insbesondere auf diesen aufgesetzt werden. Der Zwischenrahmen wird auf ein Untergestell gesetzt, beispielsweise einen Tisch, oder einen Sockel, auf dem das Gargerät sonst gestellt werden würde. Im Zwischenrahmen ist das Gewichtsmesssystem integriert, das in effizienter Weise das Gewicht des Garbehälters des Gargeräts überwacht und über eine Differenzgewichtsbestimmung das Gewicht bzw. die Menge eines eingebrachten Stoffs ermittelt, insbesondere die Verteilung im Garbehälter. Die einzelnen Gewichtssensoren können in einfacher Weise als Dehnungsmessstreifen ausgebildet sein. Der Zwischenrahmen kann aus Edelstahl gefertigt sein, beispielsweise als ein Kant- oder Tiefziehteil ausgeführt sein.

Der Zwischenrahmen kann mit dem Untergestellt eine Einheit bilden, die beispielsweise noch ein Schubladenelement umfasst. Das Gargerät wird bei dieser Baugruppe auf den Zwischenrahmen aufgesetzt, der dann auf dem Boden steht.

Die Steuerung und der Garbehälter können einem gemeinsamen Gehäuse zugeordnet sein, beispielsweise einem Gargerätgehäuse.

Die Steuerung und der Garbehälter können vom gemeinsamen Gehäuse umgeben sein, insbesondere wobei das Gehäuse einen Technikbereich, in dem die Steuerung untergebracht ist, und den Garbehälter umgibt.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Explosionsansicht einer erfindungsgemäßen Baugruppe gemäß einer ersten Ausführungsform,
- Figur 2 eine schematische Explosionsansicht einer erfindungsgemäßen Baugruppe gemäß einer zweiten Ausführungsform,
- Figur 3 eine schematische Darstellung der Verteilung der Gewichtssensoren in einem Zwischenrahmen gemäß einer ersten Ausführungsform,
- Figur 4 eine schematische Darstellung der Verteilung der Gewichtssensoren in einem Zwischenrahmen gemäß einer zweiten Ausführungsform,
- Figur 5 eine schematische Darstellung der Verteilung der Gewichtssensoren in einem Zwischenrahmen gemäß einer dritten Ausführungsform, und
- Figur 6 eine schematische Darstellung der Verteilung der Gewichtssensoren in einem Zwischenrahmen gemäß einer vierten Ausführungsform.

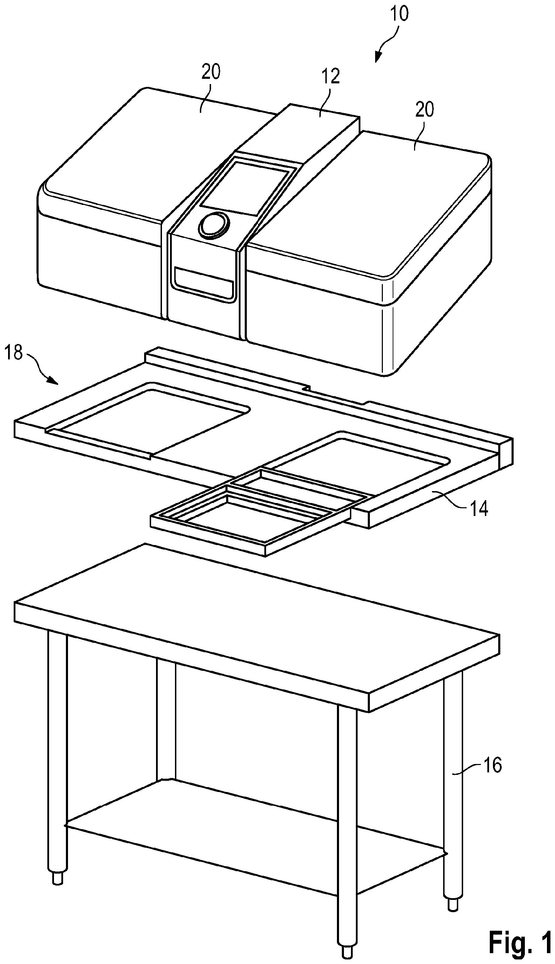

In Figur 1 ist eine Baugruppe 10 schematisch gezeigt, die ein Gargerät 12, einen Zwischenrahmen 14 sowie ein als Tisch ausgebildetes Untergestell 16 aufweist.

Das Untergestell 16 wird auf einen Boden in einem Raum aufgestellt, in dem das Gargerät 12 betrieben werden soll. Auf eine Oberfläche des Untergestells 16 wird der Zwischenrahmen 14 angeordnet, der ein Gewichtsmesssystem 18 umfasst.

Auf den Zwischenrahmen 14 wird wiederum das Gargerät 12, welches herkömmlich ausgebildet sein kann, gestellt, sodass das Gargerät 12 über den Zwischenrahmen 14 auf dem Untergestell 16 angeordnet ist. Der Zwischenrahmen 14 ist also sandwichartig zwischen dem Untergestellt 16 und dem Gargerät 12 angeordnet.

Das Gargerät 12 weist, wie üblich, einen Garbehälter 20 auf, wobei das Gargerät 12 gemäß der in Figur 1 gezeigten Ausführungsform zwei getrennte Garbehälter 20 aufweist, denen jeweils das Gewichtsmesssystem 18 zugeordnet ist. Bei den Garbehältern 20 handelt es sich um tiegelförmige Garbehälter, wie sie bei einem Tiegelgargerät üblicherweise vorgesehen sind, denen jeweils ein Deckel zugeordnet ist.

Alternativ zu der gezeigten Ausführungsform kann die Baugruppe 10 lediglich aus dem Gargerät 12 und dem Zwischenrahmen 14 bestehen, der bis zum Boden reicht. Gemäß dieser Ausführungsform bildet der Zwischenrahmen 14 gleichzeitig das Untergestellt 16 mit aus. Auch bei dieser Ausführungsvariante wird eine Auflagefläche für das Gargerät 12 bereitgestellt, der das Gewichtsmesssystem 18 zugeordnet ist, sodass das Gewicht des Gargeräts 12 ermittelt werden kann.

Ferner kann das Gewichtsmesssystem 18 auch im Gargerät 12 selbst integriert sein, sodass das Gargerät 12 lediglich auf einen herkömmlichen Tisch oder Untergestell 16 gestellt werden muss.

Unabhängig von der Ausführungsform ist das Gewichtsmesssystem 18 derart ausgebildet, dass es eine Differenzgewichtsbestimmung durchführt, um zu ermitteln, wie groß das Gewicht bzw. die Menge eines in den Garbehälter 20 eingebrachten Stoffes ist. Bei dem eingebrachten Stoff kann es sich um Gargut oder ein Garhilfsmedium handeln, beispielsweise Wasser, Öl und/oder Fett. Das Gewichtsmesssystem 18 ermittelt demnach die Tara, indem zunächst das Gewicht des Gargeräts 12 ermittelt wird und dieses mit dem Gesamtgewicht des Gargeräts 12 und des in den Garbehälter 20 eingebrachten Stoffes verglichen wird, wobei das Gewicht des eingebrachten Stoffes entsprechend über die Differenz ermittelt wird.

Das vom Gewichtsmesssystem 18 ermittelte Gewicht wird dann als Parameter für eine Sicherheitsfunktion und/oder eine Garprozessoptimierung herangezogen , wie nachfolgend erläutert wird.

Beispielsweise soll mit der in Figur 1 gezeigten Baugruppe 10 eine Suppe zubereitet werden, wofür zunächst Wasser in den Garbehälter 20 gegeben wird. Die Menge des Wassers kann dabei direkt am Gargerät 12 bestimmt werden, da das Gewichtsmesssystem 18 dem Garbehälter 20 zugeordnet ist. Zunächst wurde das Gewicht des Gargeräts 12 bestimmt und anschließend das Gewicht des Gargeräts 12 mit den in den Garbehälter 20 eingebrachten Wasser, sodass die beiden ermittelten Gewichte voneinander abgezogen werden, um die Tara zu bestimmen, also das Gewicht des eingebrachten Wassers.

Die Bedienung des Gargeräts 12 sowie das Betreiben des Gargeräts 12 vereinfacht sich entsprechend, da der Benutzer des Gargeräts 12 direkt vor Ort ermitteln kann, wie viel Wasser er bereits in den Garbehälter 20 eingebracht hat. Er muss die Wassermenge also nicht erst separat ermitteln.

Die Baugruppe 10 weist eine Anzeige auf, über die dem Bediener die entsprechende Information des ermittelten Gewichts angezeigt werden können. Sofern lediglich das Gargerät 12 eine entsprechende Anzeigefläche hat, ist das Gewichtsmesssystem 18 mit dem Gargerät 12 verbunden, um die entsprechenden Daten zu übertragen.

In analoger Weise kann so das Gewicht eines eingebrachten Stoffes wie einem Gargut ermittelt werden, sodass die Menge des Garguts vor Ort ermittelt wird. Der Bediener des Gargeräts 12 erhält somit vor Ort die Informationen, die für das Portionieren relevant sind.

Zudem kann das ermittelte Gewicht an eine Steuerung des Gargeräts 12 übermittelt werden, sodass das Gargerät 12 bzw. ein mit dem Gargerät 12 durchzuführender Garprozess in automatisierter Weise durchgeführt wird. Entsprechend wird beispielsweise eine Heizleistung und/oder die Gardauer des Garprozesses automatisch an das ermittelte Gewicht des eingebrachten Stoffes angepasst, insbesondere des Garguts. Der Zwischenrahmen 14 und das Gargerät 12 sind demnach elektrisch miteinander gekoppelt.

Das Gargerät 12 ist demnach eingerichtet, für den Garprozess relevante Parameter während des Garprozesses aufgrund der durchgeführten Differenzgewichtsbestimmung anzupassen. Bei den Parametern kann es sich um die Heizleistung und/oder die Gardauer handeln, aber auch um die eingebrachten Stoffe, beispielsweise die Garhilfsmedien.

Entsprechend können Füllstände der Stoffe mittels der Differenzgewichtsbestimmung erfasst und überwacht werden. Die Steuerung, die die entsprechenden Daten erhält, kann daraufhin eine Warnung oder Meldung an den Benutzer senden, wonach der erfasste Füllstand kritisch ist. Bei dem kritischen Zustand kann es sich um einen zu geringen Füllstand handeln, der für das Garergebnis nicht optimal ist, oder um einen zu hohen Füllstand, bei dem ein Überlaufen droht. Beide Fälle können durch entsprechende, in der Steuerung des Gargeräts 12 hinterlegte Schwellwerte erfasst werden. Ein Erreichen oder Überschreiten des Schwellwerts kann die Ausgabe einer Warnung oder Meldung an den Bediener zur Folge haben, sodass dieser manuell eingreifen kann.

Als Meldung kann ein Nachfüllen eines bestimmten Stoffes vorgesehen sein, beispielsweise Wasser. Der Garprozess ist entsprechend optimiert, da variable Füllstände während des Garprozesses möglich sind. Das Nachfüllen kann auch in automatisierter Weise erfolgen, indem beispielsweise Wasser über den Wasserzulauf zugeführt wird.

Alternativ oder ergänzend ist ein zweiter Schwellwert vorgesehen, bei dem beispielsweise eine Sicherheitsfunktion auslöst. Dies kann das automatische Sperren eines Wasserzulaufs sein, sodass ein Überfüllen des Garbehälters wirksam verhindert ist.

Ferner kann das ermittelte Gewicht des eingebrachten Stoffs als Parameter einer Sicherheitsfunktion dienen, beispielsweise bei einem Dampfgarbetrieb des Gargeräts 12.

Hierbei kann in analoger Weise eine eingebrachte Wassermenge ermittelt werden, die jedoch als sicherheitsrelevanter Parameter vom Gargerät 12 aufgefasst und so verarbeitet wird, da bei einer zu großen Wassermenge ein zu hoher Druck aufgebaut werden könnte, was den sicheren Betrieb des Gargeräts 12 beeinträchtigen würde.

Das Gewichtsmesssystem 18 ist dabei insbesondere mit dem Gargerät 12 gekoppelt, beispielsweise mit einer Steuerung des Gargeräts 12, sodass der Garprozess nicht gestartet werden kann, da ein sicherheitsrelevantes Problem vorliegt. Hierüber wird der Benutzer des Gargeräts 12 wiederum mittels der Anzeige informiert.

Ferner kann eine Menge von Frittieröl/-fett als ein sicherheitsrelevanter Parameter verwendet werden, beispielsweise bei einem Fritteusenbetrieb des Gargeräts 12. Sofern der Benutzer des Gargeräts 12 einen Garprozess gewählt hat, bei dem das Gargerät 12 im Fritteusenbetrieb betrieben werden soll, wird die Menge des in den Garbehälter 20 eingebrachten Frittieröls/-fetts ermittelt. Sofern die Menge einen Schwellwert überschreitet, so kann das Gargerät 12 gesperrt und/oder eine Warnung den Benutzer ausgegeben werden.

Des Weiteren kann eine Garprozessoptimierung darin liegen, dass die Gewichtsreduktion des Garguts während des Garprozesses bestimmt wird, also live. Die Gewichtsreduktion wird entsprechend über die Differenzgewichtsbestimmung erfasst. Bei bestimmten Gargütern ist eine Gewichtsreduktion nicht erwünscht, sodass die Garprozessparameter entsprechend angepasst werden können, um einen weiteren Gewichtsverlust zu vermeiden. Beispielsweise wird die Heizleistung heruntergesetzt.

Zudem lässt sich über die ermittelte Gewichtsreduktion des Garguts den optimalen Garzeitpunkt ermitteln. Beispielsweise bei der Reduktion einer Soße oder ähnlichem. Entsprechend kann erfasst werden, wann das Gargut die gewünschte Konsistenz aufweist.

Generell kann die während des Garprozess eintretende Gewichtsreduktion des Garguts und/oder der Garhilfsmedien, also der im Garbehälter 20 vorliegenden Stoffe, als Parameter für die Garprozessoptimierung heranziehen. Beispielsweise werden Einstellungen am Gargerät 12 aufgrund der erfassten Gewichtsreduktion automatisch vorgenommen oder dem Bediener des Gargeräts 12 werden entsprechende Einstellungen vorgeschlagen. Bei den Einstellungen kann es sich um geänderte Heizleistungen und/oder Gardauern handeln.

Ferner können Kochrezepte mit dem Gargerät 12 leichter durchgeführt werden, da die entsprechenden Mengen der einzelnen, in den Garbehälter 20 eingefüllten Stoffe direkt im Garbehälter 20 über die Differenzgewichtsbestimmung gemessen werden können. Dieser Vorgang wird als sogenannte Zuwiegefunktion bezeichnet. Bei den einzelnen, in den Garbehälter 20 eingefüllten Stoffen kann es sich um Garhilfsmedien handeln wie Wasser, Öl und/oder Fett oder um das Gargut selbst.

Zudem lassen sich Kochrezepte in einfacher Weise programmieren und/oder editieren, indem die gewogene Menge eines in den Garbehälter 20 eingebrachten Stoffes, der als Zutat für das entsprechende Kochrezept dient, als Sollwert einprogrammiert wird oder der im Kochrezept bestehende Sollwert überschrieben wird. Die Programmierung kann dabei am Gargerät 12 oder dem Gewichtsmesssystem erfolgen, insbesondere der entsprechenden Steuerung.

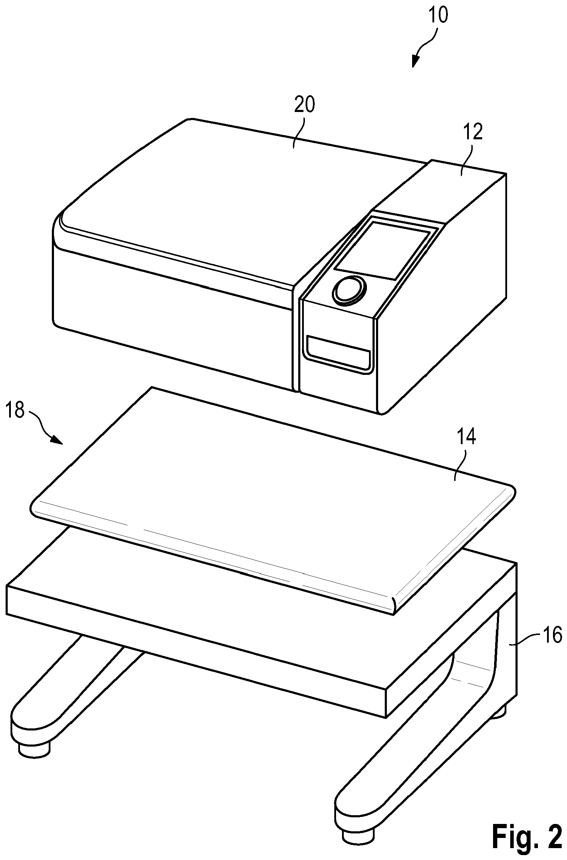

In Figur 2 ist eine Baugruppe 10 gemäß einer zweiten Ausführungsform gezeigt, bei der der Zwischenrahmen 14 vollflächig ausgebildet ist.

Der Zwischenrahmen 14 stellt eine Matte dar, auf die das Gargerät 12 aufgesetzt wird. Der als Matte ausgebildete Zwischenrahmen 14 wird dabei auf einer Auflagefläche des Untergestells 16 gelegt, auf die üblicherweise das Gargerät 12 gestellt werden würde.

In analoger Weise zur ersten Ausführungsform weist der Zwischenrahmen 14 das Gewichtsmesssystem 18 auf, sodass es möglich ist, über eine Differenzgewichtsbestimmung das Gewicht bzw. die Menge eines in den Garbehälter 20 eingebrachten Stoffes zu ermitteln.

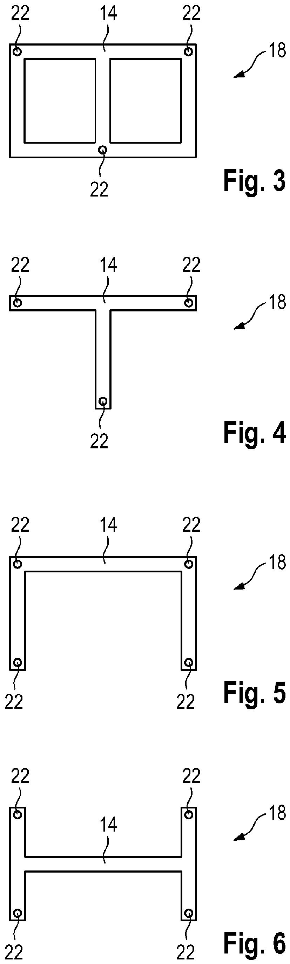

In den Figuren 3 bis 6 sind Ausführungsvarianten des Zwischenrahmens 14 gezeigt, bei denen das Gewichtsmesssystem 18 unterschiedlich aufgebaut ist. Ferner weisen die Zwischenrahmen 14 selbst ebenfalls unterschiedliche Formen auf.

Aus den Figuren 3 bis 6 geht auch hervor, dass das Gewichtsmesssystem 18 mehrere Gewichtssensoren 22 umfasst, die verteilt im jeweiligen Zwischenrahmen 14 angeordnet sind. Aus den Figuren geht hervor, dass beispielsweise drei oder vier Gewichtssensoren 22 im jeweiligen Zwischenrahmen 14 integriert sind. Die exakte Anzahl kann jedoch variieren.

Die Gewichtssensoren 22 sind dabei so verteilt, dass möglichst große Abstände zwischen ihnen vorliegen. Hierdurch ist es möglich, dass nicht nur das Gesamtgewicht des eingebrachten Stoffes über die Differenzgewichtsbestimmung ermittelt werden kann, sondern auch dessen Verteilung im Garbehälter 20. Dies ist insbesondere dann von Vorteil, wenn es sich bei dem eingebrachten Stoff um einen Feststoff handelt, beispielsweise bei einem zu garenden Gargut.

Dementsprechend kann bestimmt werden, an welchen Stellen das Gargut im Garbehälter 20 eingebracht worden ist, also die Stellen an denen Gargut im Garbehälter 20 vorliegt.

Diesen Stellen zugeordnete Heizelemente können dann entsprechend unterschiedlich angesteuert werden, um das Gargut zu garen. So wird beispielsweise ein Heizelement, das einer geringen Menge von Gargut zugeordnet ist, weniger stark erhitzt wie ein Heizelement, das einer großen Menge von Gargut zugeordnet ist. Sofern es Stellen gibt, an denen gar kein Gargut eingebracht wurde, so können die entsprechend zugeordneten Heizelemente nicht eingeschaltet werden.

Hierdurch lässt sich das Gargerät 12 in effizienter Weise betreiben, da Heizelemente nicht eingeschaltet werden müssen, denen kein Gargut zugeordnet ist, bzw. die Heizelemente in optimierter Weise betrieben werden.

Die Gewichtssensoren 22 können als Dehnungsmessstreifen oder piezoelektrische Sensoren ausgebildet sein, über die sich das Gewicht entsprechend bestimmen lässt.

Der Zwischenrahmen 14 kann aus Edelstahl ausgebildet sein, insbesondere als ein Kant- oder Tiefziehteil.

Aufgrund der Differenzgewichtsbestimmung des eingebrachten Stoffes sowie der Nutzung des ermittelten Gewichts als Parameter ist erfindungsgemäß sichergestellt, dass ein mit dem Gargerät 12 betriebener Garprozess effizient und optimiert betrieben werden kann.

## Patentansprüche

1. Verfahren zum Betreiben eines Gargeräts (12), das einen Garbehälter (20), dem ein Gewichtsmesssystem (18) zugeordnet ist, und eine Steuerung umfasst, über die der Ablauf eines Garprozesses in automatischer Weise gesteuert wird, wobei das Gewicht eines in den Garbehälter (20) eingebrachten Stoffes über eine Differenzgewichtsbestimmung ermittelt wird, wobei zunächst das Gewicht des Gargeräts ermittelt wird und dies vom Gesamtgewicht abgezogen wird, nachdem der Stoff in den Garbehälter (20) eingebracht wurde, sodass sich die Tara bzw. das Taragewicht ermittelt lässt, und wobei das ermittelte Gewicht als Parameter für eine Sicherheitsfunktion und/oder eine Garprozessoptimierung herangezogen wird, wobei die Garprozessoptimierung zumindest eine Zeitoptimierung umfasst, sodass der Garprozess hinsichtlich seiner Dauer an das Gewicht des eingebrachten Stoffes angepasst wird, **dadurch gekennzeichnet, dass** aufgrund einer während des ablaufenden Garprozesses ermittelten Gewichtsreduktion der im Garbehälter (20) vorliegenden Stoffe Einstellungen am Gargerät (12) aufgrund der erfassten Gewichtsreduktion automatisch vorgenommen oder dem Bediener des Gargeräts (12) vorgeschlagen werden, wobei die Menge des eingebrachten Stoffs ermittelt wird, und, sofern das Gewichtsmesssystem (18) feststellt, dass eine eingebrachte Menge von Wasser bzw. Frittieröl/-fett einen Schwellwert überschreitet, ein Druckbetrieb bzw. ein Fritteusenbetrieb des Gargeräts (12) abgesichert wird, indem eine Warnung ausgegeben und/oder das Gargerät gesperrt wird.

2. Verfahren nach Anspruch 1, **dadurch gekennzeichnet, dass** es sich bei dem Stoff um Wasser, Öl oder Gargut handelt.

3. Verfahren nach Anspruch 1 oder 2, **dadurch gekennzeichnet, dass** das ermittelte Gewicht des eingebrachten Stoffes angezeigt wird.

4. Verfahren nach einem der vorhergehenden Ansprüche, **dadurch gekennzeichnet, dass** die Menge des eingebrachten Stoffes ermittelt wird, sodass das Portionieren des Garguts vereinfacht wird.

5. Verfahren nach einem der vorhergehenden Ansprüche, **dadurch gekennzeichnet, dass** das ermittelte Gewicht des eingebrachten Stoffes für eine automatisierte Garprozessoptimierung verwendet wird.

6. Verfahren nach einem der vorhergehenden Ansprüche, **dadurch gekennzeichnet, dass** das ermittelte Gewicht des Stoffes zur Heiztemperaturoptimierung des Garprozesses herangezogen wird.

7. Verfahren nach einem der vorhergehenden Ansprüche, **dadurch gekennzeichnet, dass** die Gewichtsverteilung des Stoffes im Garbehälter (20) ermittelt wird, sodass dem Garbehälter (20) zugeordnete Heizelemente in Abhängigkeit von der ermittelten Verteilung des Stoffes angesteuert werden.

8. Baugruppe (10) mit einem Gewichtsmesssystem (18) und einem Gargerät (12), das eine Steuerung aufweist, die eingerichtet ist, ein Verfahren nach einem der vorhergehenden Ansprüche durchzuführen.

9. Baugruppe (10) nach Anspruch 8, **dadurch gekennzeichnet, dass** das Gewichtsmesssystem (18) in einem Zwischenrahmen (14) integriert ist, auf dem das Gargerät (12) angeordnet ist, insbesondere wobei das Gewichtsmesssystem (18) mehrere einzelne Gewichtssensoren (22) aufweist, die verteilt angeordnet sind.

## Claims

1. A method of operating a cooking appliance (12) which comprises a cooking vessel (20) to which a weight measuring system (18) is assigned, and a control system by means of which the sequence of a cooking process is controlled in an automatic manner, wherein the weight of a substance introduced into the cooking vessel (20) is determined via a weight difference determination, wherein first the weight of the cooking appliance is determined and is subtracted from the total weight after the substance has been introduced into the cooking vessel (20), so that the tare or tare weight can be determined, and wherein the determined weight is used as a parameter for a safety function and/or a cooking process optimization, wherein the cooking process optimization comprises at least a time optimization, so that the duration of the cooking process is adapted to the weight of the substance introduced, **characterized in that** based on a reduction in weight, determined during the proceeding cooking process, of the substances present in the cooking vessel (20), adjustments are made automatically on the cooking appliance (12) on the basis of the weight reduction detected, or are suggested to the operator of the cooking appliance (12), wherein the quantity of the substance introduced is determined and, if the weight measuring system (18) ascertains that an introduced quantity of water and/or deep-frying oil/fat exceeds a threshold value, an operation of the cooking appliance (12) under pressure or as a deep fryer is protected by outputting a warning and/or disabling the cooking appliance.

2. The method according to claim 1, **characterized in that** the substance is water, oil, or food to be cooked.

3. The method according to claim 1 or 2, **characterized in that** the determined weight of the introduced substance is displayed.

4. The method according to any of the preceding claims, **characterized in that** the quantity of the introduced substance is determined, with the result that the portioning of the food to be cooked is simplified.

5. The method according to any of the preceding claims, **characterized in that** the determined weight of the introduced substance is used for an automated cooking process optimization.

6. The method according to any of the preceding claims, **characterized in that** the determined weight of the substance is used for the heating temperature optimization of the cooking process.

7. The method according to any of the preceding claims, **characterized in that** the weight distribution of the substance in the cooking vessel (20) is determined, so that heating elements assigned to the cooking vessel (20) are actuated according to the determined distribution of the substance.

8. An assembly (10) comprising a weight measuring system (18) and a cooking appliance (12), which has a control system which is set up to carry out a method according to any of the preceding claims.

9. The assembly (10) according to claim 8, **characterized in that** the weight measuring system (18) is integrated in an intermediate frame (14) on which the cooking appliance (12) is arranged, in particular wherein the weight measuring system (18) has several individual weight sensors (22), which are arranged distributed.

## Revendications

1. Procédé de mise en œuvre d'un appareil de cuisson (12) qui comprend un récipient de cuisson (20) auquel un système de mesure de poids (18) est associé, et une commande au moyen de laquelle le déroulement d'une procédure de cuisson est commandée de manière automatique, le poids d'une matière introduite dans le récipient de cuisson (20) étant déterminé par détermination du poids différentiel, le poids de l'appareil de cuisson étant tout d'abord déterminé et celui-ci déduit du poids total après l'introduction de la matière dans le récipient de cuisson (20) de manière à pouvoir déterminer la tare ou le poids de tare, et le poids déterminé étant utilisé en tant que paramètre pour une fonction de sécurité et/ou une optimisation de la procédure de cuisson, l'optimisation de la procédure de cuisson comprenant au moins une optimisation du temps de sorte que la procédure de cuisson est adaptée au poids de la matière introduite en ce qui concerne sa durée, **caractérisé en ce qu'**en raison d'une réduction de poids des matières présentes dans le récipient de cuisson (20), déterminée pendant le déroulement de la procédure de cuisson, des réglages sont automatiquement effectués au niveau de l'appareil de cuisson (12) ou proposés à l'utilisateur de l'appareil de cuisson (12) en raison de la réduction de poids saisie, la quantité de la matière introduite étant déterminée, et, dans la mesure où le système de mesure de poids (18) détecte qu'une quantité introduite d'eau ou d'huile/de graisse de friture dépasse une valeur seuil, un fonctionnement en pression ou un fonctionnement de friteuse de l'appareil de cuisson (12) est sécurisé en émettant une alerte et/ou en bloquant l'appareil de cuisson.

2. Procédé selon la revendication 1, **caractérisé en ce que** la matière est de l'eau, de l'huile ou un produit à cuire.

3. Procédé selon la revendication 1 ou 2, **caractérisé en ce que** le poids déterminé de la matière introduite est affiché.

4. Procédé selon l'une des revendications précédentes, **caractérisé en ce que** la quantité de la matière introduite est déterminée de manière à simplifier le portionnement du produit à cuire.

5. Procédé selon l'une des revendications précédentes, **caractérisé en ce que** le poids déterminé de la matière introduite est utilisé pour une optimisation automatisée de la procédure de cuisson.

6. Procédé selon l'une des revendications précédentes, **caractérisé en ce que** le poids déterminé de la matière est utilisé pour une optimisation de température de chauffage de la procédure de cuisson.

7. Procédé selon l'une des revendications précédentes, **caractérisé en ce que** la répartition du poids de la matière dans le récipient de cuisson (20) est déterminée de sorte que des éléments de chauffage associés au récipient de cuisson (20) sont pilotés en fonction de la répartition déterminée de la matière.

8. Ensemble (10) comprenant un système de mesure de poids (18) et un appareil de cuisson (12) qui présente une commande aménagée de manière à réaliser un procédé selon l'une des revendications précédentes.

9. Ensemble (10) selon la revendication 8, **caractérisé en ce que** le système de mesure de poids (18) est intégré dans un cadre intermédiaire (14) sur lequel l'appareil de cuisson (12) est agencé, le système de mesure de poids (18) présentant une pluralité de capteurs de poids individuels (22) qui sont agencés de manière répartie.
